(19) 

**Europäisches Patentamt**
**European Patent Office**
**Office européen des brevets**

(11) **EP 2 741 400 B1**

(12) **EUROPEAN PATENT SPECIFICATION**

(45) Date of publication and mention
of the grant of the patent:
**21.02.2018 Bulletin 2018/08**

(51) Int Cl.:
*H02K 1/27* *(2006.01)*    *H02K 1/24* *(2006.01)*

(21) Application number: **11870651.4**

(86) International application number:
**PCT/CN2011/079062**

(22) Date of filing: **29.08.2011**

(87) International publication number:
**WO 2013/020312 (14.02.2013 Gazette 2013/07)**

(54) **MOTOR ROTOR AND MOTOR HAVING SAME**

MOTORROTOR UND MOTOR DAMIT

ROTOR DE MOTEUR ET MOTEUR COMPORTANT CE ROTOR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.08.2011 CN 201110224896**

(43) Date of publication of application:
**11.06.2014 Bulletin 2014/24**

(73) Proprietors:
• **Gree Electric Appliances, Inc. of Zhuhai**
  **Zhuhai, Guangdong 519070 (CN)**
• **Gree Green Refrigeration Technology Center Co. Ltd. of Zhuhai**
  **Zhuhai, Guangdong 519070 (CN)**

(72) Inventors:
• **HUANG, Hui**
  **Zhuhai**
  **Guangdong 519070 (CN)**
• **HU, Yusheng**
  **Zhuhai**
  **Guangdong 519070 (CN)**
• **CHEN, Dongsuo**
  **Zhuhai**
  **Guangdong 519070 (CN)**
• **CHEN, Huajie**
  **Zhuhai**
  **Guangdong 519070 (CN)**
• **XIAO, Yong**
  **Zhuhai**
  **Guangdong 519070 (CN)**
• **ZENG, Xueying**
  **Zhuhai**
  **Guangdong 519070 (CN)**
• **ZHANG, Wenming**
  **Zhuhai**
  **Guangdong 519070 (CN)**

(74) Representative: **Inchingalo, Simona et al**
**Bugnion S.p.A.**
**Viale Lancetti, 17**
**20158 Milano (IT)**

(56) References cited:
CN-A- 1 149 778    CN-A- 1 243 351
CN-U- 202 142 924    CN-U- 202 142 925
CN-U- 202 142 926    JP-A- 2002 354 766
JP-A- 2009 044 860    JP-A- 2011 083 066
US-A- 4 924 130    US-A- 4 924 130
US-B1- 6 218 753    US-B2- 6 815 859

**Description**

TECHNICAL FIELD

The present disclosure relates to the field of electric motor, and more specially, to a motor rotor and a motor having same.

BACKGROUND OF THE INVENTION

An Interior Permanent Magnet (IPM) Synchronous Motor is a motor, in which a layer of permanent magnets are provided inside the rotor, and which mainly uses permanent magnetic torque, assisted with reluctance torque. A known synchronous motor is described in document JP 2011 083066.

A formula for the combination of permanent magnetic torque and reluctance torque is as follows: $T = mp(L_q - L_d)i_d i_q + mp\Psi_{PM}i_q$.

Wherein, T is the output torque of the motor, and the performance of the motor can be improved by increasing the value of T; the first term, after T in the equation, is the reluctance torque; the second term is the permanent magnetic torque; $\Psi_{PM}$ is the maximum of the stator and rotor coupling flux generated by the permanent magnet of the motor; m is the number of the phases of the stator winding; $L_d$ and $L_q$ are respectively the d-axis inductance and the q-axis inductance, wherein d-axis refers to the axis that coincides with the main magnetic pole axis; q-axis refers to the axis that is perpendicular to the main magnetic pole axis, wherein "perpendicular to" involves the electric angle; $i_d$ and $i_q$ respectively represent the armature current component along the d-axis and the armature current component along the q-axis.

In the prior art, the performance of the motor is improved mainly by improving the performance of the permanent magnet, i.e. the value of the composite torque is increased by increasing the permanent magnetic torque, so as to improve the efficiency of the motor. A common method is to embed rare earth permanent magnets in the motor. As rare earth belongs to non-renewable resources and is expensive, the wider application of this kind of motor is limited. Moreover, the pressing demand of further improving the efficiency of the motor can not be satisfied only through improving the performance of the motor by means of improving the performance of the permanent magnet.

SUMMARY OF THE INVENTION

The present disclosure aims at providing a motor rotor and a motor having same, which can improve the efficiency of the motor through increasing the reluctance torque, thereby reducing the consumption of the rare earth permanent magnet.

In one aspect, the present disclosure provides a motor rotor comprising an iron core and a plurality of sets of permanent magnets provided inside the iron core, wherein: a plurality of sets of mounting slots are circumferentially distributed in the iron core; each set of mounting slots comprises two or more layers of mounting slots provided at intervals in radial direction of the iron core; the permanent magnets of each set of permanent magnets are correspondingly embedded into the mounting slots of each set of mounting slots; each set of permanent magnets comprises a permanent magnet which has an arc-shaped cross section perpendicular to the axis of the rotor; each permanent magnet is in a shape of arc with gradual changing thickness; wherein the thickness is the largest in the center and gets smaller gradually at two ends;

each set of mounting slots comprises a first mounting slot and a second mounting slot; the permanent magnet embedded in the first mounting slot is a first permanent magnet; the permanent magnet embedded in the second mounting slot is a second permanent magnet; and a for-

mula $\dfrac{1}{5} \le \dfrac{g}{T} \le \dfrac{4}{5}$ is satisfied, wherein, T is the sum of thicknesses of all permanent magnets of each set of permanent magnets, the thicknesses are taken along the direction of the symmetric line of the permanent magnets; g is the sum of distances between each two adjacent permanent magnets of each set of permanent magnets, the distances are taken along the direction of the symmetric line of the permanent magnets.

Preferably, each set of mounting slots comprises a first mounting slot, a second mounting slot and a third mounting slot; the permanent magnet embedded in the first mounting slot is a first permanent magnet; the permanent magnet embedded in the second mounting slot is a second permanent magnet; the permanent magnet embedded in the third mounting slot is a third permanent magnet; and a formula $\dfrac{2}{5} \le \dfrac{g}{T} \le 1$ is satisfied, wherein, T is the sum of thicknesses of all permanent magnets of each set of permanent magnets, the thicknesses are taken along the direction of the symmetric line of the permanent magnets; g is the sum of distances between each two adjacent permanent magnets of each set of permanent magnets, the distances are taken along the direction of the symmetric line of the permanent magnets.

Preferably, there is a clearance between each of two ends of each permanent magnet and its corresponding magnet slot.

Preferably, the clearance between each of two ends of each permanent magnet and its corresponding magnet slot is filled with non-magnetic medium.

Preferably, a surface of each permanent magnet of each set of permanent magnets, which is closer to the center of the rotor along the radial direction, is arc-shaped.

Preferably, each permanent magnet of each set of permanent magnets has an arc-shaped cross section perpendicular to the axis of the rotor.

Preferably, a surface of the outmost layer of permanent magnet, which is far away from the center of the rotor along the radial direction, is flat; and a surface of the outmost layer of permanent magnet, which is near to the center of the rotor, is arc-shaped.

Preferably, arc-shaped surfaces of the permanent magnets of each set permanent magnets protrude towards the center of the rotor.

Preferably, the nearer an arc-shaped surface of the permanent magnet is to the center of the rotor, the larger the radian of the arc-shaped surface is.

In another aspect, the present disclosure provides a motor comprising the motor rotor described above.

According to the motor rotor and the motor having same of the present disclosure, a plurality of sets of mounting slots are circumferentially distributed in the iron core; each set of the mounting slots comprises two or more layers of mounting slots provided at intervals in the radial direction of the iron core; the permanent magnets of each set of permanent magnets are correspondingly embedded into the mounting slots of each set of mounting slots. There are a plurality of layers of permanent magnets disposed along the d-axis, and the reluctance of the permanent magnet itself is quite large, which is about equal to the permeability of air, so the d-axis inductance $L_d$ is less, while the q-axis inductance $L_q$ is greater due to the greater permeability of the iron core itself. Accordingly, the reluctance torque of the motor rotor is increased, thereby improving the efficiency of the motor without the need of increasing the consumption of the rare earth permanent magnet, and the usage of the rare earth is reduced.

## BRIEF DESCRIPTION OF THE DRAWINGS

The drawings of the present application are provided for further comprehension of the present disclosure. The illustrative embodiments of the present invention and the corresponding description aim at explaining the present disclosure but are not intended to restrict the present disclosure. Regarding the drawings:

Fig. 1 is a structural diagram illustrating the motor rotor according to the first embodiment of the present disclosure;
Fig. 2 is a structural diagram illustrating the motor rotor according to the second embodiment of the present disclosure;
Fig. 3 is a schematic diagram illustrating the thicknesses of permanent magnets and the distance between two adjacent permanent magnets according to the first embodiment of the present disclosure;
Fig. 4 is a schematic diagram illustrating the thicknesses of permanent magnets and the distance between two adjacent permanent magnets according to the second embodiment of the present disclosure;

Fig. 5 is a schematic diagram illustrating the inductance difference of the d-axis inductance and the q-axis inductance versus the ratio of the sum of the thicknesses of all permanent magnets and the sum of the distances of each two adjacent permanent magnets according to the first embodiment of the present disclosure;
Fig. 6 is a schematic diagram illustrating the inductance difference of the d-axis inductance and the q-axis inductance versus the ration of the sum of the thicknesses of all permanent magnets and the sum of the distances of each two adjacent permanent magnets according to the second embodiment of the present disclosure;
Fig. 7 is an effect diagram illustrating the distribution of magnetic flux according to the first embodiment of the present disclosure.

## DETAILED DESCRIPTION OF THE PREFERRED EMBODIMENTS

The embodiments of the present invention will be described in details with reference to the accompanying drawings.

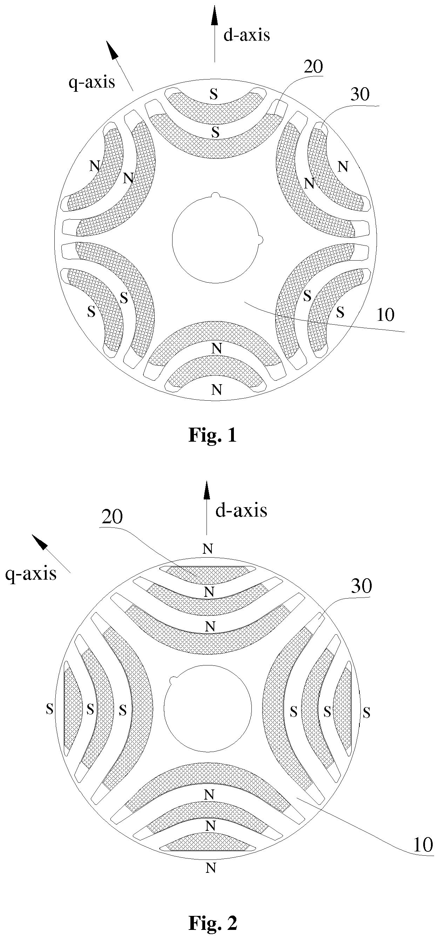

As shown in Fig.1, the motor rotor according to the first embodiment of the present invention comprises an iron core 10 and permanent magnets 20 provided therein. A plurality of sets of mounting slots 30 are circumferentially distributed in the iron core 10. Each set of mounting slots 30 comprises two or more layers of mounting slots 30 provided at intervals in radial direction of the iron core 10. There are a plurality of sets of permanent magnets 20, and the permanent magnets 20 of each set of permanent magnets 20 are correspondingly embedded into the mounting slots 30 of each set of mounting slots 30.

As shown in Fig.1, the iron core 10 of the motor rotor is formed by stacked and pressed silicon steel sheets and has a certain height. Six sets of mounting slots 30 are circumferentially distributed in the iron core 10 around the axis of the iron core 10. Each set of mounting slots 30 comprises two layers of arc-shaped mounting slots 30. The d-axis and the q-axis of the motor rotor are shown in the figures. The mounting slots 30 shrink and get smaller gradually along the d-axis. The permanent magnets 20 are disposed in the mounting slots 30, and the permanent magnets 20 in the same set of magnet slots have the same magnetic polarity and face the periphery of the motor rotor. For example, as shown in Fig.1, two layers of permanent magnets 20 along the d-axis are respectively shown as S-pole, and adjacent two sets of permanent magnets 20 have the opposite magnetic polarity, i.e., the six sets of mounting slots 30 circumferentially distributed in the iron core are alternating sets of N-pole magnets and S-pole magnets. There are a plurality of layers of permanent magnets 20 arranged along the d-axis, and the reluctance of the permanent magnet 20 itself is quite large, which is about equal to the permeability of air, so the d-axis inductance $L_d$ is less, while the q-axis inductance $L_q$ is greater due to the greater permeability of the iron core 10 itself. Accordingly, the reluctance torque of the motor rotor is increased; thereby the output torque of the motor is increased, i.e., the efficiency of the motor is improved. Thus, the conventional method of improving the efficiency of the motor through increasing consumption of rare earth permanent magnets can be replaced by the above scheme of improving the efficiency of the motor, which reduces the usage of the rare earth, saves the resources and reduces the pollution of environment on one hand, and on the other hand, lowers the production cost and improves the competitiveness of products.

As shown in Fig.1, in the first embodiment, there is a clearance between each of two ends of each permanent magnet 20 and its corresponding magnet slot 30. Preferably, the clearance between each of two ends of each permanent magnet 20 and its corresponding magnet slot 30 is filled with non-magnetic medium.

As shown in Fig.1, each set of permanent magnets 20 comprises permanent magnets 20 having arc-shaped cross sections perpendicular to the axis of the rotor. The surface of each permanent magnet 20 of each set of permanent magnets 20, which is closer to the center of the rotor along the radial direction, is arc-shaped. In the first embodiment, the permanent magnets 20 of each set of permanent magnets 20 have arc-shaped cross sections, namely, the permanent magnet 20 is in a shape of arc with the same thickness. The arc-shaped permanent magnet 20 is a little shorter than the corresponding mounting slot 30. After the permanent magnet 20 is inserted into the corresponding mounting slot 30, there is a clearance left between each of two ends of the permanent magnet 20 and its corresponding magnet slot 30. The clearances are filled with air or non-magnetic medium.

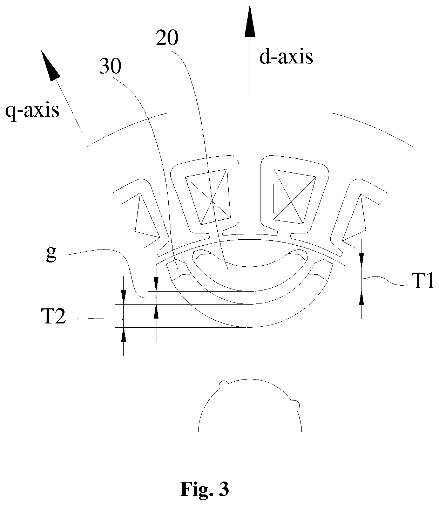

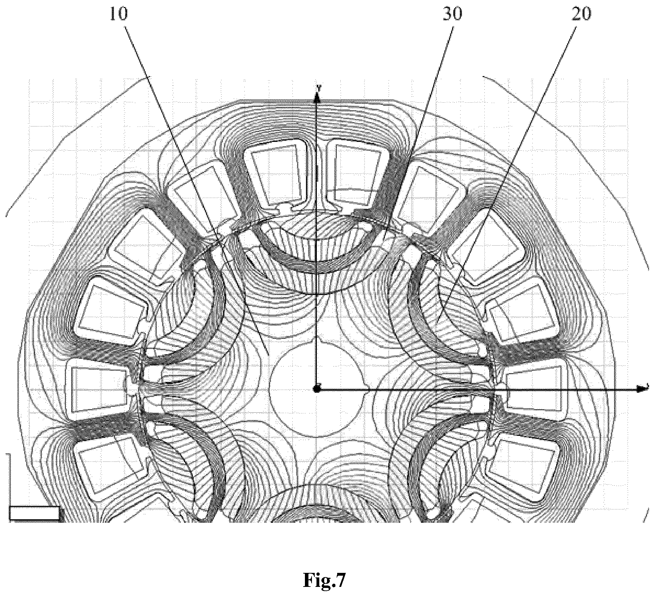

As shown in Fig.3, in the first embodiment of the motor rotor, each set of mounting slots 30 comprises a first mounting slot away from the center of the rotor and a second mounting slot near to the center of the rotor. The permanent magnet 20 embedded in the first mounting slot is the first permanent magnet, and the permanent magnet 20 embedded in the second mounting slot is the second permanent magnet. $T$ is the sum of the thicknesses of all permanent magnets 20 of each set of permanent magnets 20, wherein the thicknesses are taken along the direction of the symmetric line of the permanent magnets 20; $g$ is the sum of all distances between each two adjacent permanent magnets 20 of each set of permanent magnets 20, wherein the distances are taken along the direction of the symmetric line of the permanent magnets 20. The formula $\dfrac{1}{5} \leq \dfrac{g}{T} \leq \dfrac{4}{5}$ is satisfied. As shown in Fig.7, when the formula is satisfied, the magnetic flux in the channel between two adjacent layers of magnetic steel is dense, which makes full use of the q-axis magnetic circuit and increases the output torque of the motor.

Specifically, the longest sides of the first permanent magnet and the second permanent magnet, which are taken in the cross sections perpendicular to the axis of the rotor are respectively the first longest side and the second longest side. The distance between two intersection points is the thickness of the first permanent magnet, wherein one intersection point is formed by a straight line, which passes through the geometric center of the first longest side and any point on the first longest side, and the first longest side; and the other intersection point is formed by the same straight line and the opposite side of the first longest side. The distance between two intersection points is the thickness of the second permanent magnet, wherein one intersection point is formed by a straight line, which passes through the geometric center of the second longest side and any point on the second longest side, and the the second longest side; and the other intersection point is formed by the same straight line and the opposite side of the second longest side. The distance between two intersection points is the distance between the first permanent magnet and the second permanent magnet, wherein the two intersection points are formed by a straight line, which passes through the common geometric center of the first longest side of the first permanent magnet and the second longest side of the second permanent magnet, and two adjacent sides which belong to the first permanent magnet and the second permanent magnet respectively The largest thickness of the first permanent magnet is $T1$, and the largest thickness of the second permanent magnet is $T2$. The largest distance between the first permanent magnet and the second permanent magnet is $g1$.

In the first embodiment, the thickness of each permanent magnet 20 along the symmetric line of the permanent magnets 20 is the largest thickness of the permanent magnet 20, so the formula $T=T1+T2$ is satisfied. According to the first embodiment, as each set of permanent magnets comprises two permanent magnets 20, the largest distance g1 between the first permanent magnet and the second permanent magnet equals the sum g of all distances between each two adjacent permanent magnets 20 of each set of permanent magnets 20, which are taken along the direction of the symmetric line of the permanent magnets 20, i.e., $g = g1$

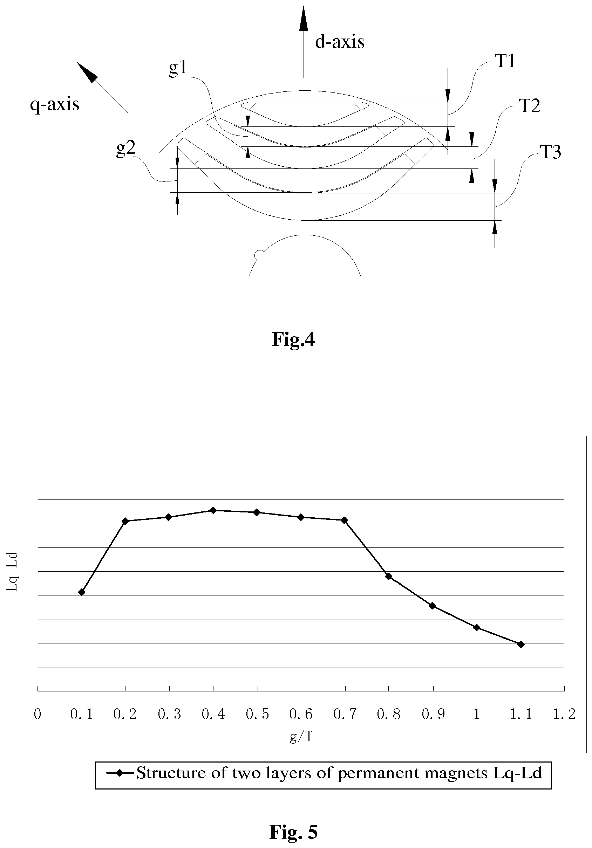

Based on test data, Fig.5 is made, which is a schematic diagram illustrating the inductance difference of the d-axis inductance and the q-axis inductance versus the ratio of the sum of the thicknesses of all permanent magnets and the sum of the distances between each two adjacent permanent magnets according to the motor rotor of the first embodiment. When the ratio of g to T satisfies the formula $\dfrac{1}{5} \leq \dfrac{g}{T} \leq \dfrac{4}{5}$, larger value of $L_d$ - $L_q$ can be achieved, which increases the output torque of the motor and improves the efficiency of the motor.

$$\frac{1}{5} \le \frac{g}{T} \le \frac{7}{10}$$

Preferably, the formula is satisfied.

As shown in Fig.2, according to the second embodiment of the present invention, four sets of mounting slots 30 are circumferentially distributed in the iron core 10 around the axis of the iron core 10 with the center point located on said axis. Each set of mounting slots 30 comprises three layers of arc-shaped mounting slots 30.

The surface of the outmost layer of permanent magnet 20, which is far away from the center of the rotor along the radial direction, is flat; while the surface of the outmost layer of permanent magnet 20 near to the the center of the rotor is arc-shaped. The surfaces of other layers of permanent magnets 20, whether far away from or near to the center of the rotor, are all arc-shaped. The arc-shaped surfaces of the permanent magnets 20 of each set permanent magnets 20 protrude towards the center of the rotor. The nearer the arc-shaped surface is to the center of the rotor, the larger the radian of the arc-shaped surface is. Accordingly, in the second embodiment, the thickness of the center part of the permanent magnet 20, in the cross section perpendicular to the axis of the rotor, is larger than the thickness of each of the two ends of the permanent magnet 20, namely, the permanent magnet 20 is in a shape of arc with gradual changing thickness, wherein the thickness is the largest in the center and gets smaller gradually at two ends.

As shown in Fig.4, in the second embodiment of the present invention, each set of mounting slots 30 comprises the first mounting slot, the second mounting slot and the third mounting slot, which are arranged from far away from the center of the rotor to near to the center of the rotor. The permanent magnet 20 embedded in the first mounting slot is the first permanent magnet, the permanent magnet 20 embedded in the second mounting slot is the second permanent magnet, and the permanent magnet 20 embedded in the third mounting slot is the third permanent magnet. T is the sum of the thicknesses of all permanent magnets 20 of each set of permanent magnets 20, which is along the direction of the symmetric line of the permanent magnets 20, and g is the sum of the distances between each two adjacent permanent magnets 20 of each set of permanent magnets 20, which is along the direction of the symmetric line of the permanent magnets 20. The formula

$$\frac{2}{5} \le \frac{g}{T} \le 1$$

is satisfied.

Specifically, the longest sides of the first permanent magnet, the second permanent magnet and the third permanent magnet along radial direction of the cross sections perpendicular to the axis of the rotor, are respectively the first longest side, the second longest side and the third longest side. The distance between two intersection points is the thickness of the first permanent magnet, wherein one intersection point is formed by a straight line, which passes through the geometric center of the first longest side and any point on the first longest side, and the first longest side; and the other intersection point is formed by the same straight line and the opposite side of the first longest side. The distance between two intersection points is the thickness of the second permanent magnet, wherein one intersection point is formed by a straight line, which passes through the geometric center of the second longest side and any point on the second longest side, and the second longest side; and the other intersection point is formed by the same straight line and the opposite side of the second longest side. The distance between two intersection points is the thickness of the third permanent magnet, wherein one intersection point is formed by a straight line, which passes through the geometric center of the third longest side and any point on the third longest side, and the third longest side; and the other intersection point is formed by the same straight line and the opposite side of the third longest side. The distance between two intersection points is the distance between the first permanent magnet and the second permanent magnet, wherein the two intersection points are formed by a straight line, which passes through the common geometric center of the first longest side of the first permanent magnet and the second longest side of the second permanent magnet, and two adjacent sides which belong to the first permanent magnet and the second permanent magnet respectively. The distance between two intersection points is the distance between the second permanent magnet and the third permanent magnet, wherein the two intersection points are formed by a straight line, which passes through the common geometric center of the second longest side of the first permanent magnet and the third longest side of the second permanent magnet, and two adjacent sides which belong to the second permanent magnet and the third permanent magnet respectively.

The largest thickness of the first permanent magnet is $T1$, the largest thickness of the second permanent magnet is $T2$ and the largest thickness of the third permanent magnet is $T3$. The largest distance between the first permanent magnet and the second permanent magnet is $g1$, and the largest distance between the second permanent magnet and the third permanent magnet is $g2$. As shown in Fig.4, in the second embodiment, the thickness of each permanent magnet along the symmetric line of the permanent magnets 20 is the largest thickness of the permanent magnet, namely, the sum $T$ of the largest thickness of all permanent magnets 20 of each set of permanent magnets 20 is calculated through the formula $T = T1 + T2 + T3$. The distances between each two adjacent permanent magnets 20 of each set of permanent magnets 20, which is along the direction of the symmetric line of the permanent magnets 20, is the largest distance between each two adjacent the permanent magnets, so the formula $g = g1 + g2$ is satisfied.

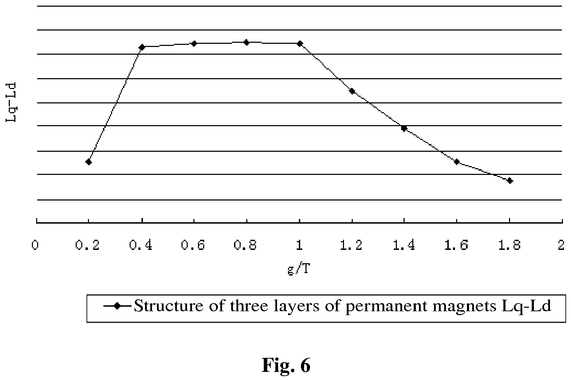

As shown in Fig.6, which is a schematic diagram illustrating the inductance difference of the d-axis inductance and the q-axis inductance versus the ratio of the sum of the thicknesses of all permanent magnets and the sum of the distances of each two adjacent permanent magnets according to the motor rotor of the second embodiment, when the ratio of *g* to *T* satisfies the formula

$$\frac{2}{5} \le \frac{g}{T} \le 1,$$

larger value of $L_d - L_q$ can be achieved, which increases the output torque of the motor and improves the efficiency of the motor.

The present disclosure further provides a motor, which comprises the motor rotor described above.

The motor rotor of the present disclosure improves the utilization of the reluctance torque and the efficiency of the motor through properly defining the relation between the sum of thicknesses of the permanent magnets and the sum of the distances between each two adjacent permanent magnets. The motor of the present disclosure can be applied in compressors of air conditioners, in electric vehicles and in electric fan systems.

As can be seen from the description above, the embodiments of the present invention can achieve the technical effects as follows:

The motor rotor and the motor having same of the present disclosure increases the reluctance torque of the motor rotor, and further increases the output torque of the motor and improves the efficiency of the motor as well. The conventional method of improving the efficiency of the motor through adding more rare earth permanent magnets can be replaced by the method of improving the efficiency of the motor described above, which reduces the usage of rare earth, saves the resources and reduces the pollution of environment on one hand, and on the other hand, lowers the production cost and improves the competitiveness of products.

The preferred embodiments described above are not restricted. It will be understood by those skilled in the art that various amendments, replacement and improvement based on the thoughts and principles of the disclosure may be made therein without departing from the scope of the disclosure.

**Claims**

1. A motor rotor, comprising an iron core (10) and a plurality of sets of permanent magnets (20) provided inside the iron core (10), wherein:

   a plurality of sets of mounting slots (30) are circumferentially distributed in the iron core (10); each set of mounting slots (30) comprises two or more layers of mounting slots (30) provided at intervals in radial direction of the iron core (10);

the permanent magnets (20) of each set of permanent magnets (20) are correspondingly embedded into the mounting slots (30) of each set of mounting slots; each set of permanent magnets (20) comprises permanent magnets (20) having an arc-shaped cross section perpendicular to the d-axis of the rotor; each permanent magnet (20) is in a shape of arc with gradual changing thickness; wherein the thickness is the largest in the center and gets smaller gradually at two ends; **characterised in that** each set of mounting slots (30) comprises a first mounting slot and a second mounting slot; the permanent magnet (20) embedded in the first mounting slot is a first permanent magnet; the permanent magnet (20) embedded in the second mounting slot is a second permanent

   $$\frac{1}{5} \le \frac{g}{T} \le \frac{4}{5}$$

   magnet; and a formula is satisfied, wherein, *T* is the sum of thicknesses of all permanent magnets (20) of each set of permanent magnets (20), the thicknesses are taken along the direction of the symmetric line of the permanent magnets (20); *g* is the sum of distances between each two adjacent permanent magnets (20) of each set of permanent magnets (20), the distances are taken along the direction of the symmetric line of the permanent magnets (20).

2. The motor rotor according to claim 1, wherein: each set of mounting slots (30) comprises a first mounting slot, a second mounting slot and a third mounting slot; the permanent magnet (20) embedded in the first mounting slot is a first permanent magnet; the permanent magnet (20) embedded in the second mounting slot is a second permanent magnet; the permanent magnet (20) embedded in the third mounting slot is a third permanent magnet; and a

   $$\frac{2}{5} \le \frac{g}{T} \le 1$$

   formula is satisfied, wherein, *T* is the sum of thicknesses of all permanent magnets (20) of each set of permanent magnets (20), the thicknesses are taken along the direction of the symmetric line of the permanent magnets (20); *g* is the sum of distances between each two adjacent permanent magnets 20 of each set of permanent magnets (20), the distances are taken along the direction of the symmetric line of the permanent magnets (20).

3. The motor rotor according to any one of claims 1 to 2, wherein: there is a clearance between each of two ends of each permanent magnet (20) and its corresponding magnet slot (30).

**4.** The motor rotor according to claim 3, wherein: the clearance between each of two ends of each permanent magnet (20) and its corresponding magnet slot (30) is filled with non-magnetic medium.

**5.** The motor rotor according to claim 1, wherein: a surface of each permanent magnet (20) of each set of permanent magnets (20), which is closer to the center of the rotor along the radial direction, is arc-shaped.

**6.** The motor rotor according to claim 1, wherein: arc-shaped surfaces of the permanent magnets (20) of each set permanent magnets (20) protrude towards the center of the rotor.

**7.** The motor rotor according to claim 1, wherein: the nearer an arc-shaped surface of the permanent magnet is to the center of the rotor, the larger the radian of the arc-shaped surface is.

**8.** A motor, comprising the motor rotor according to any one of the claims 1 to 7.

**Patentansprüche**

**1.** Motorrotor, umfassend einen Eisenkern (10) und eine Vielzahl an Sätzen von Permanentmagneten (20), bereitgestellt im Eisenkern (10), wobei eine Vielzahl an Sätzen von Montagevertiefungen (30) umfangseitig im Eisenkern (10) verteilt ist, wobei ein jeder Satz von Montagevertiefungen (30) zwei oder mehr Schichten Montagevertiefungen (30) umfasst, die in Abständen in radialer Richtung des Eisenkerns (10) bereitgestellt sind, wobei die Permanentmagneten (20) eines jeden Satzes von Permanentmagneten (20) entsprechend in den Montagevertiefungen (30) eines jeden Satzes von Montagevertiefungen eingebettet sind; wobei ein jeder Satz von Permanentmagneten (20) Permanentmagneten (20) umfasst, die einen bogenförmigen Querschnitt, senkrecht zur D-Achse des Rotors, aufweisen, wobei ein jeder Permanentmagnet (20) eine Bogenform mit stufenweise wechselnder Dicke aufweist, wobei die Dicke in der Mitte die höchste ist und stufenweise an zwei Enden abnimmt, **dadurch gekennzeichnet, dass** ein jeder Satz von Montagevertiefungen (30) eine erste Montagevertiefung und eine zweite Montagevertiefung umfasst, wobei es sich bei dem in der ersten Montagevertiefung eingebetteten Permanentmagneten (20) um einen ersten Permanentmagneten (20) handelt, wobei es sich beim in der zweiten Montagevertiefung eingebetteten Permanentmagneten (20) um einen zweiten Permanentmagneten handelt,

wobei eine Formel $\frac{1}{5} \leq \frac{g}{T} \leq \frac{4}{5}$ erfüllt wird, wobei $T$ die Summe der Dicken aller Permanentmagneten (20) eines jeden Satzes von Permanentmagneten (20) ist und die Dicken entlang der Richtung der symmetrischen Linie der Permanentmagneten (20) gemessen werden, $g$ die Summe der Abstände zwischen zwei angrenzenden Permanentmagneten (20) eines jeden Satzes von Permanentmagneten (20) ist und die Abstände entlang der Richtung der symmetrischen Linie der Permanentmagneten (20) gemessen werden.

**2.** Motorrotor nach Anspruch 1, wobei ein jeder Satz von Montagevertiefungen (30) eine erste Montagevertiefung, eine zweite Montagevertiefung und eine dritte Montagevertiefung umfasst, wobei es sich bei dem in der ersten Montagevertiefung eingebetteten Permanentmagneten (20) um einen ersten Permanentmagneten handelt, wobei es sich beim in der zweiten Montagevertiefung eingebetteten Permanentmagneten (20) um einen zweiten Permanentmagnet handelt, wobei es sich beim in der dritten Montagevertiefung eingebetteten Permanentmagneten (20) um einen dritten Permanentmagneten handelt,

wobei eine Formel $\frac{2}{5} \leq \frac{g}{T} \leq 1$ erfüllt wird, wobei $T$ die Summe der Dicken aller Permanentmagneten (20) eines jeden Satzes von Permanentmagneten (20) ist und die Dicken entlang der Richtung der symmetrischen Linie der Permanentmagneten (20) gemessen werden, $g$ die Summe der Abstände zwischen zwei angrenzenden Permanentmagneten (20) eines jeden Satzes von Permanentmagneten (20) ist und die Abstände entlang der Richtung der symmetrischen Linie der Permanentmagneten (20) gemessen werden.

**3.** Motorrotor nach einem der Ansprüche 1 bis 2, wobei ein Abstand zwischen einem jeden der zwei Enden eines jeden Permanentmagneten (20) und seiner entsprechenden Magnetvertiefung (30) besteht.

**4.** Motorrotor nach Anspruch 3, wobei der Abstand zwischen einem jeden der zwei Enden eines jeden Permanentmagneten (20) und seiner entsprechenden Magnetvertiefung (30) mit nicht magnetischem Medium gefüllt ist.

**5.** Motorrotor nach Anspruch 1, wobei eine Oberfläche eines jeden Permanentmagneten (20) eines jeden Satzes von Permanentmagneten (20), die der Mitte des Rotors entlang der radialen Richtung näher ist, bogenförmig ist.

**6.** Motorrotor nach Anspruch 1, wobei bogenförmige Oberflächen der Permanentmagneten (20) eines jeden Satzes von Permanentmagneten (20) zur Mitte des Rotors hervorstehen.

**7.** Motorrotor nach Anspruch 1, wobei der Radiant der bogenförmigen Oberfläche umso größer ist, je näher eine bogenförmige Oberfläche des Permanentmagneten an der Mitte des Rotors angeordnet ist.

**8.** Motor, umfassend den Motorrotor nach einem der Ansprüche 1 bis 7.

**Revendications**

**1.** Rotor de moteur, comprenant un noyau de fer (10) et une pluralité d'ensembles d'aimants permanents (20) prévus à l'intérieur du noyau de fer (10), dans lequel :

une pluralité d'ensembles de fentes de montage (30) sont répartis sur la circonférence dans le noyau de fer (10) ; chaque ensemble de fentes de montage (30) comprend deux ou plusieurs couches de fentes de montage (30) prévues à intervalles dans une direction radiale du noyau de fer (10) ;
les aimants permanents (20) de chaque ensemble d'aimants permanents (20) sont intégrés de façon correspondante dans les fentes de montage (30) de chaque ensemble de fentes de montage ;
chaque ensemble d'aimants permanents (20) comprend des aimants permanents (20) comportant une section transversale en forme d'arc perpendiculaire à l'axe d du rotor ;
chaque aimant permanent (20) a la forme d'un arc avec une variation d'épaisseur graduelle ; dans lequel l'épaisseur est la plus large au centre et devient plus petite graduellement au niveau des deux extrémités ;
**caractérisé en ce que**
chaque ensemble de fentes de montage (30) comprend une première fente de montage et une seconde fente de montage ; l'aimant permanent (20) intégré dans la première fente de montage est un premier aimant permanent ; l'aimant permanent (20) intégré dans la seconde fente de montage est un second aimant permanent ;

et une formule $\frac{1}{5} \le \frac{g}{T} \le \frac{4}{5}$ est satisfaite, dans laquelle $T$ est la somme des épaisseurs de tous les aimants permanents (20) de chaque ensemble d'aimants permanents (20), les épaisseurs sont prises le long de la direction de la ligne symétrique des aimants permanents (20) ; g est la somme des distances entre chacun des deux aimants permanents adjacents (20) de chaque ensemble d'aimants permanents (20), les distances sont prises le long de la direction de la ligne symétrique des aimants permanents (20).

**2.** Rotor de moteur selon la revendication 1, dans lequel chaque ensemble de fentes de montage (30) comprend une première fente de montage, une seconde fente de montage et une troisième fente de montage ; l'aimant permanent (20) intégré dans la première fente de montage est un premier aimant permanent ; l'aimant permanent (20) intégré dans la seconde fente de montage est un second aimant permanent ; l'aimant permanent (20) intégré dans la troisième fente de montage est un troisième aimant permanent ;

et une formule $\frac{2}{5} \le \frac{g}{T} \le 1$ est satisfaite, dans laquelle $T$ est la somme des épaisseurs de tous les aimants permanents (20) de chaque ensemble d'aimants permanents (20), les épaisseurs sont prises le long de la direction de la ligne symétrique des aimants permanents (20) ; g est la somme des distances entre chacun deux deux aimants permanents adjacents (20) de chaque ensemble d'aimants permanents (20), les distances sont prises le long de la direction de la ligne symétrique des aimants permanents (20).

**3.** Rotor de moteur selon l'une quelconque des revendications de 1 à 2, dans lequel se trouve un espace libre entre chacune des deux extrémités de chaque aimant permanent (20) et sa fente de montage (30) correspondante.

**4.** Rotor de moteur selon la revendication 3, dans lequel l'espace libre entre chacune des deux extrémités de chaque aimant permanent (20) et sa fente de montage (30) correspondante est rempli d'un moyen amagnétique.

**5.** Rotor de moteur selon la revendication 1, dans lequel une surface de chaque aimant permanent (20) de chaque ensemble d'aimants permanents (20), étant plus proche du centre du rotor le long de la direction radiale, est arquée.

**6.** Rotor de moteur selon la revendication 1, dans lequel les surfaces arquées des aimants permanents (20) de chaque ensemble d'aimants permanents (20) dépassent en direction du centre du rotor.

**7.** Rotor de moteur selon la revendication 1, dans lequel plus une surface arquée de l'aimant permanent se rapproche du centre du rotor, plus le rayon de la surface arquée est grand.

8. Moteur, comprenant le rotor de moteur selon l'une quelconque des revendications de 1 à 7.

**Fig. 1**

**Fig. 2**

**Fig. 3**

**Fig.4**

—◆— Structure of two layers of permanent magnets Lq-Ld

**Fig. 5**

**Fig. 6**

**Fig.7**

**EP 2 741 400 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011083066 A